# EUROPÄISCHE PATENTSCHRIFT

(11) **EP 3 171 335 B1**
(45) Veröffentlichungstag und Bekanntmachung des Hinweises auf die Patenterteilung: **25.12.2019**
(21) Anmeldenummer: 16199841.4
(22) Anmeldetag: 21.11.2016
(51) Int. Cl.: G06T 7/80

(54) **VERFAHREN ZUM REKTIFIZIEREN EINER BILDAUFNAHME**
METHOD FOR RECTIFICATION A CAPTURED FRAME
PROCÉDÉ DE RECTIFICATION D'UN ENREGISTREMENT D'IMAGE

(30) Priorität: 19.11.2015 AT 7472015
(43) Veröffentlichungstag der Anmeldung: 24.05.2017
(73) Patentinhaber: PKE Holding AG, 1100 Wien (AT)
(72) Erfinder: KLOIHOFER, Werner, 4210 Gallneukirchen (AT); MOSER, Bernhard, 4020 Linz (AT); KNIEFACZ, Philipp, 1100 Wien (AT)
(74) Vertreter: Burgstaller, Peter

(56) Entgegenhaltungen:
- US-B2- 8 872 925
- Kanhere, Neeraj Krantiveer: "VISION BASED DETECTION TRACKING AND CLASSIFICATION OF VEHICLES USING STABLE FEATURES WITH AUTOMATIC CAMERA CALIBRATION. CHAPTER 5. (Dissertation)", , 2008, Seiten 70-81, XP002768594, Clemson University, ProQuest Dissertations Publishing Gefunden im Internet: URL:http://search.proquest.com/docview/193 991559?pq-origsite=gscholar [gefunden am 2017-03-07]
- BISWAJIT BOSE ET AL: "Ground Plane Rectification by Tracking Moving Objects", PROCEEDINGS OF THE JOINT IEEE INTERNATIONAL WORKSHOP ON VISUAL SURVEILLANCE AND PERFORMANCE EVALUATION OF TRACKING AND SURVEILLANCE, 1. Oktober 2003 (2003-10-01), Seiten 1-8, XP002464737,

## Beschreibung

Die hier offenbarte Erfindung betrifft ein Verfahren zum Kalibrieren zumindest einer geometrischen Größe mittels zumindest einer ersten Bildaufnahme und einer zweiten Bildaufnahme, wobei ein erster Punkt P1 und ein zweiter Punkt P2, welche Punkte eine Referenzstrecke R12 definieren, entlang eines Bewegungsvektors L1 beziehungsweise L2 relativ zu einem Betrachtungspunkt mit einer Geschwindigkeit v1 beziehungsweise v2 bewegt werden, wobei R12 in einem Winkel α1 zu L1 und in einem Winkel α2 zu L2 orientiert ist und R12 mit L1 und/oder L2 eine Ebene E12 definiert, wobei die erste Bildaufnahme einen verzerrten Punkt P1'(t1) und einen verzerrten Punkt P2'(t1) sowie die verzerrte Referenzstrecke R12'(t1) zu einem Zeitpunkt t1 zeigt und die zweite Bildaufnahme einen verzerrten Punkt P1'(t2) und einen verzerrten Punkt P2'(t2) sowie die verzerrte Referenzstrecke R12'(t2) zu einem Zeitpunkt t2 zeigt, wobei die Punkte P1'(t1) und P2'(t1) sowie P1'(t2) und P2'(t2) mittels bekannter Bildverarbeitungsmethoden aus der ersten Bildaufnahme und aus der zweiten Bildaufnahme extrahierbar sind.

Eine geometrische Größe kann beispielsweise eine Längenangabe, eine Koordinatenangabe, eine Winkelangabe, ein Radius, ein Punkt und/oder eine Vielzahl von Punkten sein. Die geometrische Größe kann durch die betrachteten Punkte definiert sein.

Verfahren zum Rektifizieren eines Bildes sind nach dem Stand der Technik bekannt.

Die folgenden unter Punkt [1] bis [5] als Stand der Technik zu nennenden Verfahren basieren auf einem auf Punkt zu Punkt Korrespondenzen basiertem Kalibrierungsverfahren für Objekte mit mehr als zwei Markierungspunkten:
[1] Janne Heikkila and Olli Silven. 1997. A Four-step Camera Calibration Procedure with Implicit Image Correction. In Proceedings of the 1997 Conference on Computer Vision and Pattern Recognition (CVPR '97) (CVPR '97). IEEE Computer Society, Washington, DC, USA .
[2] J. Heikkila and O. Silven. Calibration procedure for short focal length off-the-shelf CCD cameras. In Pattern Recognition, 1996., Proceedings of the 13th International Conference on, volume 1, 1996 .
[3] B. Triggs, Camera pose and calibration from 4 or 5 known 3D points, The Proceedings of the Seventh IEEE International Conference on, Vol. 1 (1999), pp. 278-284 .
[4] Janne Heikkilä, Geometric Camera Calibration Using Circular Control Points. IEEE Trans. Pattern Anal. Mach. Intell. 22, 10 (October 2000), 1066-1077. DOI=10.1109/34.879788 http://dx.doi.org/10.1109/34.879788, 2000 .
[5] Hinrichs R.N. and McLean S.P., NLT and extrapolated DLT:3-D cinematography alternatives for enlarging the volume of calibration, J Biomech. Vol. 28, nr 10,1219-23, 1995.
[6] Schoepflin, T.N. and Dailey, D.J., Dynamic camera calibration of roadside traffic management cameras for vehicle speed estimation, IEEE Transactions on Intelligent Transportation Systems, vol 4, No. 2, 90 - 98, 2003.

Die Methodik nach Schoepflin setzt die Eruierbarkeit der Fluchtpunkte in Fahrtrichtung als auch in orthogonaler Richtung voraus. Somit ist diese Methodik nur eingeschränkt für geradlinige Fahrbahnen anwendbar. Außerdem basiert diese Methodik auf der statistischen Auswertung einer Vielzahl von Fahrzeugen hinsichtlich Größe und Geschwindigkeit. Eine validierte Genauigkeit kann auf diese Weise nur bedingt erzielt werden.

In DE102007021107 ist das Ziel die möglichst genaue Optimierung des Hauptpunktes, nicht einer vollständigen Kalibrierung. Außerdem werden beim genannten Verfahren keine unverzerrten Punkte, im genannten Verfahren als reale Position bezeichnet, verschoben. Es wird nur eine einzelne Bildaufnahme durchgeführt.

US2013342706A1 offenbart keinen Hinweis auf eine angenommene Parallelität von Bewegungsvektoren. US2013342706A1 erwähnt auch nicht die Annahme einer Parallelität von Geraden, die durch das Objekt vorgegeben werden.

Das in EP2249580 offenbarte Verfahren basiert auf zumindest vier am Objekt angebrachten Markierungen, welche ein Volumen definieren. EP2249580 offenbart keinen Hinweis, dass die durch die Bildpunkte definierten Linien im Verfahren als parallele Linien betrachtet werden. Aufgrund dieser in EP2249580 nicht getroffenen Annahme werden bei dem in EP2249580 offenbarten Verfahren zumindest drei Bildpunkte betrachtet.

In "Vision-based detection, tracking and classification of vehicles using stable features with automatic camera calibration" von Neeraj Krantiveer Kanhere (veröffentlicht im August 2008) wird ebenso ein Verfahren zur automatischen Kalibrierung vorgestellt. Das darin vorgestellte Verfahren basiert unter anderem auf der Annahme, dass die Bewegung des Objektes eine Gerade ist. Außerdem sind mehrere Fahrzeug-Durchfahrten für das Verfahren erforderlich.

WO2008070319 offenbart ein Verfahren, bei welchem - wie in Absatz 014 beschreiben - ausschließlich zur Visualisierung für das menschliche Auge zu dem Bewegungsvektor orthogonale Linien erstellt werden. Diese Linien haben jedoch keinen Einfluss auf das in WO2008070319 offenbarte Verfahren. Im in WO2008070319 offenbarten Verfahren muss außerdem als zusätzlicher Schritt eine Kurven-Gleichung bestimmt werden.

WO2011102872 offenbart kein Verfahren, bei welchem die Trajektorien oder durch das beobachtete Objekt beschriebene Linien als jeweils zueinander parallel betrachtet werden. Absatz 031 und 033 von WO2011102872 erwähnen, dass die Trajektorien letztendlich zum Erkennen von abnormalen Bewegungen verwendet werden, was eine im Vergleich zu dem unten beschriebenen erfindungsgemäßen Verfahren eine komplett unterschiedliche Verwendung der Daten aus den Trajektorien darstelle. WO2011102872 offenbart somit weder implizit noch explizit eine Annahme der Parallelität der Trajektorien in Zusammenhang mit einer Entzerrung eines Bildes.

US2010295948 offenbart ein Verfahren, bei welchem Kopf- und Fußpunkte von bewegten Objekten an verschiedenen Stellen des Bildes verwendet werden. Diese Punkte tragen keine geometrischen Informationen (Parallelitäten) über die zu kalibrierende Ebene, wodurch sich im Vergleich zum erfindungsgemäßen Verfahren eingeschränkte Genauigkeit ergibt.

US2010295948 offenbart nicht die Annahme der Parallelität aus der Verschiebung einer eindimensionalen Referenzstrecke, sondern das Bestimmen von parallelen Linien.

Es findet sich in WO2008083869 kein Hinweis auf die Annahme einer Parallelität der Trajektorien oder der durch das beobachtete Objekt vorgegebenen Linien. Außerdem ergibt das in WO2008083869 offenbarte Verfahren keine vollständige Modellierung des Kalibrierungsproblems, sondern nur von Skalierungsfaktoren entlang von bestimmen Kurven.

In "Vision-based Detection, Tracking and Classification of Vehicles using Stable Fetures with Automatic Camera Calibration" von Neeraj Krantiveer Kanhere, veröffentlicht im August 2008 wird ein Verfahren offenbart, welches Verfahren auf der Ermittlung von Fluchtpunkten basiert. Dieses Dokument beschreibt einen Algorithmus zur Kalibrierung einer Kamera. Ein Algorithmus ist eine Form einer mathematischen Modellierung.

"Ground Plane Rectification by Tracking Moving Objects" von Biswajit Bose and Eric Grimson ist ein wissenschaftlicher Artikel, in welchem eine affine Rektifikation und eine metrische Rektifikation diskutiert wird. Die affine Rektifikation und eine metrische Rektifikation sind Verfahren der mathematischen Modellierung.

US8872925 offenbart ebenso ein Verfahren zum Rektifizieren eines Bildes unter Konstruktion von Bildpunkten.

Die hier offenbarte Erfindung basiert auf der Aufgabe, ein möglichst genaues Verfahren zum Kalibrieren einer geometrischen Größe und in weiterer Folge zum Rektifizieren einer Bildaufnahme bereitzustellen, welches mit möglichst einfachen und wenigen geometrischen Verhältnissen als Eingangsparameter eine hohe Genauigkeit in der Rektifizierung der Bildaufnahme erzielt. Dies ermöglicht es, in der Praxis mit im Vergleich zu herkömmlichen Methoden wesentlich geringerem Zeitaufwand eine sehr hohe Genauigkeit zu erzielen.

Das im Folgenden offenbarte, erfindungsgemäße Verfahren kann unter Verwendung von Computern durchgeführt werden. Das Verfahren zeichnet sich bei Implementierung in ein Computerprogramm durch einen sparsamen Umgang mit der zur Verfügung stehenden Rechnerleistung aus. Unter Verweis auf T84/0208 ist eine digitale Bildverarbeitung ein auf die physikalische Erscheinung angewandtes technisches Verfahren. Eine physikalische Erschei nung ist ein als elektrisches Signal gespeichertes Bild. Aus diesem Grund ist ein auf die digitale Bildbearbeitung gerichtetes Verfahren weder eine mathematische Methode noch ein Computerprogramm als solches, weshalb ein solches Verfahren patentierbar ist.

Erfindungsgemäß wird dies dadurch erreicht, dass ein erster Bewegungsvektor L1' beschreibend die Bewegung des ersten verzerrten Punktes P1' von der Position P1'(t1) zu der Position P1'(t2) aus den Bildaufnahmen und ein zweiter Bewegungsvektor L2' beschreibend die Bewegung des zweiten verzerrten Punktes P1' von der Position P2'(t1) zu der Position P2'(t2) aus den Bildaufnahmen ausgemessen wird, sodass eine mathematische Modellierung auf Basis
- einer projektiven Entzerrung unter der Annahme einer Parallelität von L1 und L2 und/oder R12(t1) und R12(t2),
- einer affinen Entzerrung unter Herstellung des unverzerrten Winkels α1 zwischen L1 und R12 und/oder des unverzerrten Winkels α2 zwischen L2 und R12 und
- einer isometrischen Rektifizierung mittels Bestimmung des Skalierungsparameters aus dem Verhältnis s=R12'/R12
durchführbar ist.

Es ist eingangs die Kalibrierung zumindest einer ersten Bildaufnahme und einer zweiten Bildaufnahme, somit die Kalibrierung von zumindest zwei Bildaufnahmen erwähnt. Der Fachmann erkennt, dass die Genauigkeit des erfindungsgemäßen Verfahrens und die Lösbarkeit der diesem Verfahren zu Grunde liegenden Formeln durch eine Anhebung der Anzahl der Bildaufnahmen verbessert werden kann.

Nach der gängigen Lehre geben die Bildaufnahmen verzerrte Eigenschaften der Punkte und der Bewegungsvektoren wieder. Wenn im Rahmen dieser Erfindung kurz ein verzerrter Punkt angeführt ist, so ist damit die verzerrte Lage eines Punktes gemeint.

Zur Durchführung des erfindungsgemäßen Verfahrens können - gegebenenfalls gedanklich - die erste Bildaufnahme und die zweite Bildaufnahme übereinandergelegt werden, sodass in einer Bildaufnahme, welche die erste Bildaufnahme und die zweite Bildaufnahme umfasst, die Punkte P1'(t1), P1'(t2), P2'(t1) und P2'(t2) sowie die Strecken R12'(t1) und R12'(t2) sichtbar sind.

Das oben beschriebene Verfahren kann darauf basieren, dass eine Parallelität von L1 und L2 angenommen wird, sodass bei Durchführung des Verfahrens nur ein Bewegungsvektor aus L1 und L2 zur perspektivischen Entzerrung herangezogen wird. Die Annahme der Parallelität ist im Rahmen der Offenbarung der Erfindung zu verstehen, dass die erwähnten Linien real nicht parallel sein müssen, jedoch bei der Durchführung des erfindungsgemäßen Verfahrens die erwähnten Linien betreffenden Daten so verarbeitet werden, als dass die erwähnten Linien parallel wären. Der unverzerrte erste Bewegungsvektor L1, der unverzerrte Bewegungsvektor L2 und der unverzerrte Bewegungsvektor L12 können bei einer gleichförmigen Bewegung wie beispielsweise einer geraden Bewegung oder einer bogenförmigen Bewegung der Referenzstrecke R, somit von P1 und P2 parallel sein.

Ergänzend kann das erfindungsgemäße Verfahren den Schritt umfassen, dass aus dem ersten Bewegungsvektor L1' und dem zweiten Bewegungsvektor L2' ein Bewegungsvektor L12' als ein Mittelmaß zwischen L1' und L2' gebildet wird, sodass die projektive Entzerrung unter der Annahme von einer Parallelität von L12, L1 und L2 und/oder die affine Entzerrung unter Herstellung des unverzerrten Winkels α12 zwischen L12 und R12 durchführbar ist. Dieser Schritt kann unter der Annahme erfolgen, dass α12=α1=α2 gilt.

Die Ermittlung des verzerrten Bewegungsvektors L12' basiert auf dem Grundgedanken, dass der ermittelte Bewegungsvektor L12' die zwischen der ersten Bildaufnahme und zweiten Bildaufnahme erfolgte Bewegung hinreichend genau beschreibt.

Der verzerrte erste Bewegungsvektor L1' kann durch Berechnung des Vektors ermittelt werden, welcher den verzerrten Punkt P1'(t1) und den verzerrten Punkt P1'(t2) verbindet. Dieser sehr einfache Verfahrensschritt kann auch zur Ermittlung des verzerrten zweiten Bewegungsvektors L2' durchgeführt werden.

Die Durchführung einer affinen Entzerrung, einer projektiven Entzerrung und einer isometrischen Skalierung ist nach der gängigen Lehre bekannt.

Das obige Verfahren kann durch iterative Minimierungsverfahren ergänzt werden.

Der Bewegungsvektor L12 kann eine polygonal verlaufende Bewegungsstrecke beschreiben. Eine polygonal verlaufende Bewegungsstrecke kann beispielsweise eine Kurve sein.

Die Erfindung schließt nicht aus, dass die Bewegungsstrecke eine Gerade ist. Im Rahmen dieser Erfindung kann eine Gerade als eine "Kurve ohne Krümmung" angesehen werden.

Der Fachmann kann die Referenzstrecke R12 an einem bewegten Objekt so auswählen, dass der Winkel α12=α1=α2 90 Grad beträgt.

Der Fachmann wählt die Bildaufnahmeposition der beispielsweise zur Aufnahme der Bildaufnahmen verwendeten Kamera so, dass die Referenzstrecke R in der ersten Bildaufnahme und in der zweiten Bildaufnahme gut sichtbar ist.

Zur Minimierung der Komplexität des erfindungsgemäßen Verfahrens wird eine konstante Geschwindigkeit v aller Punkte Pi (i=1,2) betrachtet.

Der Fachmann kann eine Gesamtbewegungsstrecke in Teilstrecken unterteilen, in welchen Teilstrecken der jeweilige Bewegungsvektor L12 eine einfach definierende geometrische Form wie beispielsweise eine Gerade oder eine Kurve mit einer konstanten Krümmung aufweist. Hierzu analog wird die Referenzstecke innerhalb dieser Teilstrecke mit einer konstanten Geschwindigkeit oder mit einer mittelbaren Geschwindigkeit bewegt, wobei die Geschwindigkeit ein gewisses Maß an Varianz aufweisen kann.

Der Fachmann wählt Δt als die Differenz zwischen t1 und t2 hinreichend klein, dass die Abweichung ΔL1 zwischen L12 und L1 und/oder die Abweichung ΔL2 zwischen L12 und L2 kleinergleich einem festgesetzten Sollwert Ls ist.

Der Wert Δt kann ein Erfahrungswert sein. Der Wert Δt kann auch durch Verfahren nach dem Stand der Technik in Bezug auf Genauigkeit mathematisch bestimmt werden. Der Fachmann kann auch iterative Verfahren zur Bestimmung von Δt anwenden.

Der Wert Δt kann auch durch die Eigenschaften der Kamera, insbesondere durch die Anzahl der Bildaufnahmen pro Zeiteinheit vorgegeben sein.

Obiges Verfahren erlaubt das Entzerren der ersten Bildaufnahme und der zweiten Bildaufnahme in der Ebene E12, in welcher die Referenzstrecke R12 mitsamt den Punkten P1 und P2 bewegt wird. Das bisher beschriebene Verfahren erlaubt somit die zweidimensionale Entzerrung.

Das obige Verfahren kann in einer zweiten Ebene E34 analog angewandt werden, sodass die Bildaufnahmen auch in Bezug auf die zweite Ebene E34 und somit auch in der dritten Dimension entzerrt werden können.

Das Verfahren kann umfassen, dass ein dritter Punkt P3 und ein vierter Punkt P4, welche eine Referenzstrecke R34 definieren, entlang eines zu dem Bewegungsvektor L1 oder L2 parallelen Bewegungsvektors L3 beziehungsweise L4 relativ zu einem Betrachtungspunkt mit der Geschwindigkeit v3 beziehungsweise v4 bewegt werden, wobei R34 in einem Winkel α3 zu L3 und in einem Winkel α4 zu L4 orientiert ist, wodurch R34 und L3 und L4 eine zu der Ebene E12 parallele Ebene E34 definieren, wobei die erste Bildaufnahme den verzerrten Punkt P3'(t1) und den verzerrten Punkt P4'(t1) sowie die verzerrte Referenzstrecke R34'(t1) zu einem Zeitpunkt t1 zeigt, eine zweite Bildaufnahme den verzerrten Punkt P3'(t2) und den verzerrten Punkt P4'(t2) sowie die verzerrte Referenzstrecke R34'(t2) zu einem Zeitpunkt t2 zeigt, welche Punkte P3'(t1) und P4'(t1) sowie P3'(t2) und P4'(t2) mittels bekannter Bildverarbeitungsmethoden aus den Bildaufnahmen extrahierbar sind, sodass ein dritter Bewegungsvektor L3' beschreibend die Bewegung des dritten verzerrten Punktes P3' von der Position P3'(t1) zu der Position P3'(t2) aus den Bildaufnahmen und ein vierter Bewegungsvektor L4' beschreibend die Bewegung des vierten verzerrten Punktes P4' von der Position P4'(t1) zu der Position P4'(t2) aus den Bildaufnahmen ausgemessen wird, sodass eine mathematische Modellierung auf Basis
- einer projektiven Entzerrung unter der Annahme einer Parallelität von L3 und L4 und/oder R34(t1) und R34(t2),
- einer affinen Entzerrung unter Herstellung des unverzerrten Winkels α3 und/oder des unverzerrten Winkels α4,
- einer isometrischen Rektifizierung mittels Bestimmung des Skalierungsparameters aus dem Verhältnis s=R34'/R34
durchführbar ist.

Der Fachmann wählt hierzu einen dritten Punkt P3 und einen vierten Punkt P4 aus. P3 weist eine Höhendifferenz h13 zu P1 und P4 eine Höhendifferenz h24 zu P2 auf.

P3 und P4 können im Rahmen der Erfindung jede beliebige Lage zu P1 und P2 aufweisen. Der Fachmann wählt ein geeignetes Koordinatensystem zur Bestimmung der Lage von P3 und P4 in Bezug zu P1 und P2.

Bei einer Anordnung von P3 und P4 vertikal über R12, ist h13 und h24 zu E12 in einem definierten Winkel β13 beziehungsweise β24 orientiert. Es gilt h13=h24+Δh, sodass E12 im Wesentlichen als parallel zu E34 angesehen werden kann. Der Fachmann definiert ein maximales Δh in Hinblick auf die Stabilität des erfindungsgemäßen Verfahrens, vorzugsweise gilt Δh=0.

Die Winkel β13 und β24 können im Prinzip jeden Wert größer 0° und kleiner 180° haben. Das erfindungsgemäße Verfahren kann jedoch dadurch vereinfacht werden, wenn |β13| = |β24| und/oder β13=β24=90° gilt.

Bei |β13| = |β24| sind die Punkte P3 und P4 und somit R34 gleichmäßig außermittig zu R12 angeordnet. Bei β13=β24=90° sind P1 und P3 beziehungsweise P2 und P4 senkrecht übereinander angeordnet.

In der folgenden Erörterung wird Δh vernachlässigt, sodass h13=h24 gilt.

Der dritte Punkt P3 und der vierte Punkt P4, welche eine Referenzstrecke R34 definieren, werden entlang einer zu dem Bewegungsvektor L1 oder L2 parallelen Bewegungsvektor L3 beziehungsweise L4 relativ zu einem Betrachtungspunkt mit der Geschwindigkeit v3 beziehungsweise v4 bewegt, wobei R34 in einem Winkel β3 zu L3 und in einem Winkel β4 zu L4 orientiert ist, wodurch R34, L3 und L4 eine zu der Ebene 12 parallele Ebene E34 definieren.

Die erste Bildaufnahme zeigt den verzerrten Punkt P3'(t1) und den verzerrten Punkt P4'(t1) sowie die verzerrte Referenzstrecke R34'(t1) zu einem Zeitpunkt t1, während die zweite Bildaufnahme den verzerrten Punkt P3'(t2) und den verzerrten Punkt P4'(t2) sowie die verzerrte Referenzstrecke R34'(t2) zu einem Zeitpunkt t2 zeigt.

Die Punkte P3'(t1) und P4'(t1) sowie P3'(t2) und P4'(t2) sind mittels bekannter Bildverarbeitungsmethoden aus den Bildaufnahmen extrahierbar, sodass ein dritter Bewegungsvektor L3' beschreibend die Bewegung des dritten verzerrten Punktes P3' von der Position P3'(t1) zu der Position P3'(t2) aus den Bildaufnahmen und ein vierter Bewegungsvektor L4' beschreibend die Bewegung des vierten verzerrten Punktes P4' von der Position P4'(t1) zu der Position P4'(t2) aus den Bildaufnahmen ausgemessen wird.

Es kann aus dem dritten Bewegungsvektor L3' und dem vierten Bewegungsvektor L4' ein Bewegungsvektor L34' als ein Mittelmaß zwischen L3' und L4' gebildet werden, welcher Bewegungsvektor L34 in einem Winkel α34 zu der Referenzstrecke R34 orientiert ist, sodass eine mathematische Modellierung des Kalibrierungsproblems auf Basis einer projektiven Entzerrung unter der Annahme einer Parallelität von L34, L3 und L4 und/oder R34'(t1) und R34'(t2), einer affinen Entzerrung unter Herstellung des unverzerrten Winkels α34 zwischen L34 und R34, und einer isometrischen Rektifizierung mittels Bestimmung des Skalierungsparameters aus dem Verhältnis s=R34'/R34 durchführbar ist.

In Analogie zu obiger Beschreibung wird angenommen, dass L3 und L4 parallel sind, sodass das Verfahren durch ein Heranziehen von L3 oder L4 durchführbar ist.

Das erfindungsgemäße Verfahren kann sich dadurch auszeichnen, dass die Geschwindigkeit v der unverzerrten Punkte P1, P2, P3, P4 und/oder der verzerrten Punkte P1', P2', P3', P4' konstant und/oder gleich ist.

Es kann somit eine Entzerrung in der Ebene E12 und eine Entzerrung in der Ebene E34 durchgeführt werden. Da der Fachmann weiters h13 und h24 kennt, ist eine dreidimensionale Entzerrung möglich.

In den nachstehenden Figuren kennzeichnen die folgenden Bezugszeichen die nachgestellten Elemente.
- P1: unverzerrter erster Punkt
- P1': verzerrter erster Punkt
- P1(t1): unverzerrter erster Punkt zum Zeitpunkt t1
- P1'(t1): verzerrter erster Punkt zum Zeitpunkt t1
- P2: unverzerrter zweiter Punkt
- P2': verzerrter zweiter Punkt
- P2(t1): unverzerrter zweiter Punkt zum Zeitpunkt t1
- P2'(t1): verzerrter zweiter Punkt zum Zeitpunkt t1
- R12: unverzerrte Referenzstrecke R12
- R12': verzerrte Referenzstrecke R12
- L12: unverzerrter Bewegungsvektor der Referenzstrecke R12
- L12': verzerrter Bewegungsvektor der Referenzstrecke R12
- L1: unverzerrter Bewegungsvektor von P1(t1) zu P1(t2)
- L1': verzerrter Bewegungsvektor von P1(t1) zu P1(t2)
- L2: unverzerrter Bewegungsvektor von P2(t1) zu P2(t2)
- L2': verzerrter Bewegungsvektor von P2(t1) zu P2(t2)
- 1: erste Bildaufnahme
- 2: zweite Bildaufnahme
- 3: Bewegungsstrecke
- 4: Auto
- α1: unverzerrte Winkel zwischen R12 und L1
- α1': verzerrte Winkel zwischen R12 und L1
- α2: unverzerrte Winkel zwischen R12 und L2
- α2': verzerrte Winkelzwischen R12 und L2
- α12: unverzerrte Winkel zwischen R12 und L12
- α12': verzerrte Winkel zwischen R12 und L12

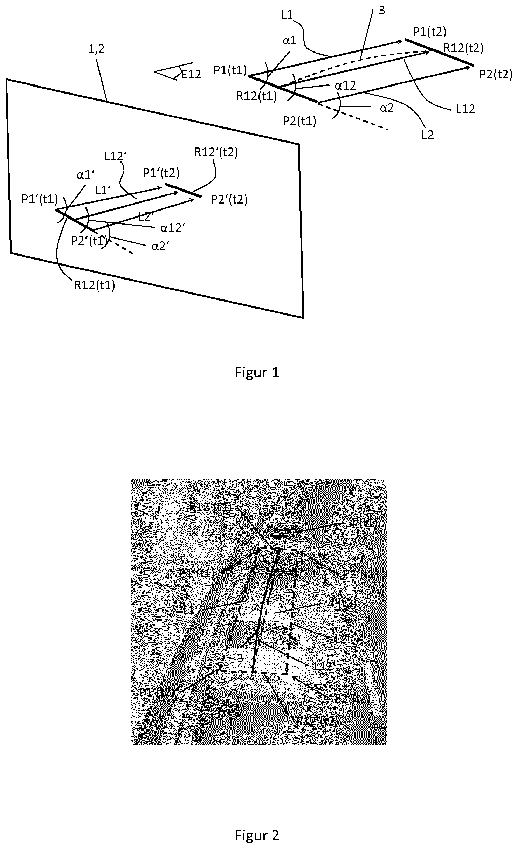

Figur 1 veranschaulicht das erfindungsgemäße Verfahren. Figur 1 zeigt in ihrem linken Teil die erste Bildaufnahme 1 und die zweite Bildaufnahme 2, welche übereinandergelegt sind. Die Bildaufnahmen 1,2 beinhalten die verzerrten geometrischen Verhältnisse, während im rechten Teil die unverzerrten geometrischen Verhältnisse dargestellt sind.

Der erste Punkt P1 und der zweite Punkt P2, welche Punkte eine Referenzstrecke R12 definieren, werden entlang einem eine polygonal verlaufende Bewegungsstrecke beschreibenden Bewegungsvektor L12 relativ zu einem in Figur 1 nicht eingetragenen Betrachtungspunkt mit einer Geschwindigkeit v12 bewegt. Der erste Punkt P1 erfährt die Bewegung L1 und der zweite Punkt P2 die zweite Bewegung L2, wobei L1 und L2 zueinander parallel und gleich lang sind, sodass eine gleichförmige Bewegung von R12 erfolgt. R12 ist in einem Winkel α=90° zu L12 orientiert, wobei α=α1=α2 gilt. Es wird durch R12 und L12 eine Ebene E12 aufgespannt, in welcher Ebene E12 die Bewegung von P1 und P2 stattfindet.

Die erste Bildaufnahme 1 zeigt den verzerrten Punkt P1'(t1) und den verzerrten Punkt P2'(t1) sowie die verzerrte Referenzstrecke R12'(t1) zu einem Zeitpunkt t1. Die zweite Bildaufnahme zeigt den verzerrten Punkt P1'(t2) und den verzerrten Punkt P2'(t2) sowie die verzerrte Referenzstrecke R12'(t1) zu einem Zeitpunkt t2. Die Bildaufnahmen werden - wie in Figur 1 dargestellt - im Rahmen der Durchführung des erfindungsgemäßen Verfahrens übereinandergelegt, sodass in einer Bildaufnahme, welche die erste Bildaufnahme und die zweite Bildaufnahme umfasst, die Punkte P1(t1), P1(t2), P2(t1) und P2(t2) sowie R12(t1) und R12(t2) sichtbar sind.

Es sind die Punkte P1'(t1) und P2'(t1) sowie P1'(t2) und P2'(t2) mittels bekannter Bildverarbeitungsmethoden aus den Bildaufnahmen extrahierbar. Der Fachmann wählt oder gestaltet die Punkte so, dass diese mittels bekannter Bildverarbeitungsmethoden extrahierbar sind.

Anhand der extrahierten Punkte P1'(t1) und P1'(t2) ist ein erster Bewegungsvektor L1' beschreibend die Bewegung des ersten verzerrten Punktes P1' von der Position P1'(t1) zu der Position P1'(t2) bestimmbar. Gleichsam ist ein zweiter Bewegungsvektor L2' beschreibend die Bewegung des zweiten verzerrten Punktes P1' von der Position P2'(t1) zu der Position P2'(t2) bestimmbar. Aus dem ersten Bewegungsvektor L1' und dem zweiten Bewegungsvektor L2' wird ein Bewegungsvektor L12' als ein Mittelmaß zwischen L1' und L2' gebildet.

Es ist somit eine mathematische Modellierung des dem erfindungsgemäßen Verfahrens zu Grunde liegenden Kalibrierungsproblems auf Basis einer projektiven Entzerrung unter der Annahme einer Parallelität von L12, L1 und L2 sowie R12(t1) und R12(t2), einer affinen Entzerrung unter Herstellung des unverzerrten Winkels α zwischen L12 und R12, und einer isometrischen Rektifizierung mittels Bestimmung des Skalierungsparameters aus dem Verhältnis s=R12'/R12 durchführbar.

Figur 2 veranschaulicht eine mögliche Anwendung des erfindungsgemäßen Verfahrens im Straßenverkehr. Figur 2 umfasst eine erste Bildaufnahme 1 und eine zweite Bildaufnahme 2, welche im Rahmen der Offenbarung des erfindungsgemäßen Verfahrens übereinander gelegt werden.

Die Scheinwerfer eines entlang einer gekrümmten Bewegungsstrecke 3 bewegten Autos 4 bilden die Punkte P1 und P2 aus. Es werden die Schweinwerfer gewählt, weil diese im Vergleich zu ihrer Umgebung einen starken Kontrast aufweisen, sodass die Punkte Pi'(t1) und Pi'(t2) (mit i=1,2) mittels Verfahren nach dem Stand der Technik in Figur 2 ermittelbar sind. Figur 2 zeigt somit das Auto 4(t1) mitsamt den Punkten P1(t1) und P2(t1) zum Zeitpunkt 1 und das Auto 4(t2) mitsamt den Punkten P1(t2) und P2(t2) zum Zeitpunkt (t2).

P1 und P2 definieren die Strecke R12. Die Länge der Strecke R12 ist vor der Durchführung des Verfahrens bekannt. Das erfindungsgemäße Verfahren kann sich dadurch auszeichnen, dass durch eine einfach auszuführende Vorrichtung zusätzliche geometrische Eigenschaften wie die Definition der Länge R12, die Parallelität der Strecke R12 zu zwei Zeitpunkten t1 und t2, die Parallelität von L1 und L2 und die Definition der Winkel zwischen R12 und L1 beziehungsweise L2 in das Bild gebracht werden. Dadurch kann die Genauigkeit des Verfahrens erheblich verbessert werden.

Der erste Punkt P1 wird definitionsgemäß entlang des Bewegungsvektors L1 bewegt. In Figur 2 verbindet der verzerrte Bewegungsvektor L1' die Punkte P1'(t1) und P1'(t2). Analog hierzu wird der zweite Punkt P2 durch den Bewegungsvektor L2 bewegt, wobei in Figur 2 der verzerrte Bewegungsvektor L2' die Punkte P2'(t1) und P2'(t2) verbindet.

L1' und L2' können zu dem Vektor L12' gemittelt werden. L12 ist in einem Winkel α zu R12 orientiert. Der Fachmann wählt die Strecke R12 so, dass R12 in einem Winkel α=90° zum Bewegungsvektor L12 orientiert ist.

Eine mathematische Modellierung des Kalibrierungsproblems ist auf Basis einer projektiven Entzerrung unter der Annahme einer Parallelität von L1, L2 sowie L12 und/oder R12(t1) und R12(t2), einer affinen Entzerrung unter Herstellung des unverzerrten Winkels α zwischen L12 und R12 und einer isometrischen Rektifizierung mittels Bestimmung des Skalierungsparameters aus dem Verhältnis s=R12'(t1)/R12 und/oder s=R12'(t2)/R12 durchführbar.

## Patentansprüche

1. Computerimplementiertes Verfahren zum Kalibrieren zumindest einer ersten Bildaufnahme und einer zweiten Bildaufnahme, welche Bildaufnahmen aus einem Betrachtungspunkt mittels einer Kamera aufgenommen werden und welche Bildaufnahmen ein sich relativ zu dem Betrachtungspunkt bewegendes Objekt umfassen,
wobei ein erster Punkt P1 des Objektes und ein zweiter Punkt P2 des Objektes, welche Punkte eine Referenzstrecke R12 definieren, entlang eines Bewegungsvektors L1 beziehungsweise L2 relativ zu dem Betrachtungspunkt mit einer Geschwindigkeit v1 beziehungsweise v2 bewegt werden, wobei R12 in einem Winkel α1 zu L1 und in einem Winkel a2 zu L2 orientiert ist und R12 mit L1 und/oder L2 eine Ebene E12 definiert, wobei
die erste Bildaufnahme einen verzerrten Punkt P1'(t1) und einen verzerrten Punkt P2'(t1) sowie eine verzerrte Referenzstrecke R12'(t1) zu einem Zeitpunkt t1 zeigt und die zweite Bildaufnahme einen verzerrten Punkt P1'(t2) und einen verzerrten Punkt P2'(t2) sowie eine verzerrte Referenzstrecke R12'(t2) zu einem Zeitpunkt t2 zeigt,
wobei die verzerrten Punkte P1'(t1) und P1'(t2) sowie P2'(t1) und P2'(t2) den unverzerrten Punkten P1 beziehungsweise P2 entsprechen und mittels bekannter Bildverarbeitungsmethoden aus der ersten Bildaufnahme und aus der zweiten Bildaufnahme extrahiert werden,
**dadurch gekennzeichnet, dass**
ein erster Bewegungsvektor L1' beschreibend die Bewegung des ersten verzerrten Punktes P1' von der Position P1'(t1) zu der Position P1'(t2) aus den Bildaufnahmen und ein zweiter Bewegungsvektor L2' beschreibend die Bewegung des zweiten verzerrten Punktes P2' von der Position P2'(t1) zu der Position P2'(t2) aus den Bildaufnahmen ermittelt wird, sodass die mathematische Modellierung auf Basis
- einer projektiven Entzerrung unter der Annahme einer Parallelität von L1 und L2 und/oder R12(t1) und R12 (t2),
- einer affinen Entzerrung unter Herstellung des unverzerrten Winkels α1 zwischen L1 und R12 und/oder des unverzerrten Winkels a2 zwischen L2 und R12 und
- einer isometrischen Rektifizierung mittels Bestimmung des Skalierungsparameters aus dem Verhältnis s=R12'/R12
durchführbar ist.

2. Verfahren nach Anspruch 1, worin aus dem ersten Bewegungsvektor L1' und dem zweiten Bewegungsvektor L2' ein Bewegungsvektor L12' als ein Mittelmaß zwischen L1' und L2' gebildet wird, sodass
- die projektive Entzerrung unter der Annahme der Parallelität von L12, L1 und L2 und/oder
- die affine Entzerrung unter der Herstellung des unverzerrten Winkels α12 zwischen L12 und R12 durchführbar ist.

3. Verfahren nach Anspruch 2, worin der Bewegungsvektor L12 eine polygonale Bewegung oder eine gerade Bewegung der Referenzstrecke R12 beschreibt.

4. Verfahren nach einem der Ansprüche 1 bis 3, worin der Winkel α12 und/oder α1 und/oder α2 90 Grad betragen.

5. Verfahren nach einem der Ansprüche 2 bis 4, worin Δt=t2-t1 hinreichend klein gewählt wird, dass die Abweichung ΔL1 zwischen L12 und L1 und/oder die Abweichung ΔL2 zwischen L12 und L2 kleinergleich einem Sollwert Ls ist.

6. Verfahren nach einem der Ansprüche 1 bis 5, worin ein dritter Punkt P3 und vierter Punkt P4, welche Punkte durch ein relativ zu dem Betrachtungspunkt bewegtes Objekt definiert werden und welche Punkte eine Referenzstrecke R34 definieren, entlang eines zu dem Bewegungsvektor L1 oder L2 parallelen Bewegungsvektor L3 beziehungsweise L4 relativ zu einem Betrachtungspunkt mit einer Geschwindigkeit v3 beziehungsweise v4 bewegt werden,
wobei R34 in einem Winkel α3 zu L3 und in einem Winkel α4 zu L4 orientiert ist, wodurch R34 und L3 und L4 eine zu der Ebene E12 parallele Ebene E34 definieren,
wobei die erste Bildaufnahme einen verzerrten Punkt P3'(t1) und einen verzerrten Punkt P4'(t1) sowie die verzerrte Referenzstrecke R34(t1) zu einem Zeitpunkt t1 zeigt,
die zweite Bildaufnahme einen verzerrten Punkt P3'(t2) und einen verzerrten Punkt P4'(t2) sowie die verzerrte Referenzstrecke R34'(t2) zu einem Zeitpunkt t2 zeigt,
welche Punkte P3'(t1) und P4'(t1) sowie P3'(t2) und P4'(t2) mittels bekannter Bildverarbeitungsmethoden aus den Bildaufnahmen extrahierbar sind, sodass ein dritter Bewegungsvektor L3' beschreibend die Bewegung des dritten verzerrten Punktes P3' von der Position P3'(t1) zu der Position P3'(t2) aus den Bildaufnahmen und
ein vierter Bewegungsvektor 14' beschreibend die Bewegung des vierten verzerrten Punktes P4' von der Position P4'(t1) zu der Position P4'(t2) aus den Bildaufnahmen ausgemessen wird, sodass
die mathematische Modellierung auf Basis
- einer projektiven Entzerrung unter Annahme einer Parallelität von L3 und L4 und/oder R34(t1) und R34(t2),
- einer affinen Entzerrung unter Herstellung des unverzerrten Winkels α3 und/oder des unverzerrten Winkels a4,
- einer isometrischen Rektifizierung mittels Bestimmung des Skalierungsparameters aus dem Verhältnis s=R34'/R34
durchführbar ist.

7. Verfahren nach Anspruch 6, worin aus dem dritten Bewegungsvektor L3' und dem vierten Bewegungsvektor L4' ein Bewegungsvektor L34' als ein Mittelmaß zwischen L3' und L4' gebildet wird, sodass
- die projektive Entzerrung unter der Annahme einer Parallelität von L34, L3 und L4 sowie R34(t1) und R34(t2),
- die affine Entzerrung unter Herstellung des unverzerrten Winkels α34 als der Winkel zwischen L34 und R34 unter der Annahme α34=α3=α4 durchführbar ist.

8. Verfahren nach einem der Ansprüche 6 bis 7, worin die Winkel α34 und/oder α3 und/oder α4 90° betragen.

## Claims

1. A computer-implemented method for calibrating at least a first image recording and a second image recording, which image recordings are taken from an observation point using a camera and which image recordings comprise an object moving with respect to said observation point,
wherein a first point P1 of the object and a second point P2 of the object, which points define a reference stretch R12, are moved along the length of movement vectors L1 and L2, respectively, with respect to the observation point at velocities v1 and v2, respectively, wherein R12 is oriented at an angle α1 with respect to L1 and at an angle α2 with respect to L2 and R12 defines a plane E12 with L1 and/or L2,
wherein the first image recording shows a distorted point P1'(t1) and a distorted point P2'(t1) as well as a distorted reference stretch R12'(t1) at a time t1 and the second image recording shows a distorted point P1'(t2) and a distorted point P2'(t2) as well as a distorted reference stretch R12'(t2) at a time t2,
wherein the distorted points P1'(t1) and P1'(t2) as well as P2'(t1) and P2'(t2) correspond to the non-distorted points P1 and P2, respectively, and are extracted from the first image recording and from the second image recording using known image processing methods,
**characterised in that**
a first movement vector L1' defining the movement of the first distorted point P1' from position P1'(t1) to position P1'(t2) from the image recordings and a second movement vector L2' defining the movement of the second distorted point P2' from position P2'(t1) to position P2'(t2) from the image recordings are determined such that mathematical modelling can be performed based on
- projective equalisation under the assumption of L1 and L2 and/or R12(t1) and R12(t2) being parallel,
- affine equalisation by producing the non-distorted angle α1 between L1 and R12 and/or the non-distorted angle α2 between L2 and R12, and
- isometric rectification by determining the scaling parameter from ratio s=R12'/R12.

2. The method according to claim 1, wherein a movement vector L12' is formed out of the first movement vector L1' and the second movement vector L2' as an average between L1' and L2' such that
- the projective equalisation under the assumption of L12, L1 and L2 being parallel and/or
- the affine equalisation by producing the non-distorted angle α12 between L12 and R12 can be performed.

3. The method of claim 2, wherein movement vector L12 defines a polygonal movement or a straight movement of reference stretch R12.

4. The method of any one of claims 1 to 3, wherein the angle(s) α12 and/or α1 and/or α2 is/are 90°.

5. The method of any one of claims 2 to 4, wherein Δt=t2-t1 is chosen to be sufficiently small to make the deviation ΔL1 between L12 and L1 and/or the deviation ΔL2 between L12 and L2 equal to or smaller than a set value Ls.

6. The method of any one of claims 1 to 5, wherein a third point P3 and a fourth point P4, which points are defined by an object moved with respect to the observation point and which points define a reference stretch R34, are moved along the length of a movement vector L3 or L4 parallel to movement vector L1 or L2, respectively, with respect to an observation point at a velocity v3 or v4, respectively,
wherein R34 is oriented at an angle α3 with respect to L3 and at an angle α4 with respect to L4 and L3 and L4 define a plane E34 parallel to plane E12,
wherein the first image recording shows a distorted point P3'(t1) and a distorted point P4'(t1) as well as the distorted reference stretch R34(t1) at a time t1, the second image recording shows a distorted point P3'(t2) and a distorted point P4'(t2) as well as the distorted reference stretch R34'(t2) at a time t2,
which points P3'(t1) and P4'(t1) as well as P3'(t2) and P4'(t2) can be extracted from the image recordings using known image processing methods such that a third movement vector L3' defining the movement of the third distorted point P3' from position P3'(t1) to position P3'(t2) from the image recordings and a fourth movement vector 14' defining the movement of the fourth distorted point P4' from position P4'(t1) to position P4'(t2) from the image recordings are measured such that mathematical modelling can be performed based on
- projective equalisation under the assumption of L3 and L4 and/or R34(t1) and R34(t2) being parallel,
- affine equalisation by producing the non-distorted angle α3 and/or the non-distorted angle α4,
- isometric rectification by determining the scaling parameter from ratio s=R34'/R34.

7. The method of claim 6, wherein a movement vector L34' is formed out of the third movement vector L3' and the fourth movement vector L4' as an average between L3' and L4' such that
- the projective equalisation under the assumption of L34, L3 and L4 as well as R34(t1) and R34(t2) being parallel,
- the affine equalisation by producing the non-distorted angle α34 as the angle between L34 and R34
can be performed under the assumption that α34=α3=α4.

8. The method of any one of claims 6 and 7, wherein the angle(s) α34 and/or α3 and/or α4 is/are 90°.

## Revendications

1. Procédé mis en œuvre par ordinateur pour calibrer au moins un premier enregistrement d'image et un deuxième enregistrement d'image, lesdits enregistrements d'image étant pris à partir d'un point de vue au moyen d'une caméra et comprenant un objet en mouvement par rapport audit point de vue,
dans lequel un premier point P1 de l'objet et un deuxième point P2 de l'objet, qui définissent un segment de référence R12, sont déplacés respectivement le long d'un vecteur de déplacement L1 et L2 par rapport au point de vue, respectivement à une vitesse v1 et v2,, où R12 est orienté selon un angle α1 par rapport à L1 et selon un angle α2 par rapport à L2 et définit un plan E12 avec L1 et/ou L2,
le premier enregistrement d'image montrant un point déformé P1'(t1) et un point déformé P2'(t1) ainsi qu'un segment de référence déformé R12'(t1) à un instant t1 et
le deuxième enregistrement d'image montrant un point déformé P1'(t2) et un point déformé P2'(t2) et un segment de référence déformé R12'(t2) à un instant t2,
les points déformés P1'(t1) et P1'(t2) ainsi que P2'(t1) et P2'(t2) correspondant respectivement aux points non déformés P1 et P2, et étant extraits du premier enregistrement d'image et du deuxième enregistrement d'image au moyen de procédés connus de traitement d'image,
**caractérisé en ce que**
un premier vecteur de déplacement L1' décrivant le déplacement du premier point déformé P1' de la position P1'(t1) vers la position P1'(t2) est déterminé à partir des enregistrements d'image, et
un deuxième vecteur de déplacement L2' décrivant le mouvement du deuxième point déformé P2' de la position P2'(t1) vers la position P2'(t2) est déterminé à partir des enregistrements d'images,
de sorte que la modélisation mathématique sur la base
- d'une compensation projective en supposant que L1 et L2 et/ou R12(t1) et R12(t2) soient parallèles,
- d'une rectification affine en produisant l'angle non déformé α1 entre L1 et R12 et/ou l'angle non déformé α2 entre L2 et R12, et
- d'une rectification isométrique en déterminant le paramètre d'échelle à partir du rapport s=R12'/R12
est faisable.

2. Procédé selon la revendication 1, dans lequel à partir du premier vecteur de déplacement L1' et du deuxième vecteur de déplacement L2' un vecteur de déplacement L12' est formé comme moyenne entre L1' et L2', de sorte que
- la compensation projective en supposant que L1 et L2 et/ou R12(t1) et R12(t2) soient parallèles, et/ou
- la rectification affine en produisant l'angle non déformé α12 entre L12 et R12 sont faisables.

3. Procédé selon la revendication 2, dans lequel le vecteur de déplacement L12 décrit un mouvement polygonal ou droit du segment de référence R12.

4. Procédé selon l'une des revendications 1 à 3, dans lequel l'angle α12 et/ou l'angle α1 et/ou l'angle α2 correspondent à 90 degrés.

5. Procédé selon l'une des revendications 2 à 4, dans lequel Δt=t2-t1 est choisi pour être assez faible pour que la déviation ΔL1 entre L12 et L1 et/ou la déviation ΔL2 entre L12 et L2 sont égales ou inférieures à la valeur nominale Ls.

6. Procédé selon l'une des revendications 1 à 5, dans lequel un troisième point P3 et un quatrième point P4, qui sont définis par un objet déplacé par rapport au point de vue et qui définissent un segment de référence R34, sont déplacés respectivement le long d'un vecteur de déplacement L3 et L4, parallèle au vecteur de déplacement L1 ou L2, par rapport à un point de vue, respectivement à une vitesse v3 et v4,
R34 étant orienté selon un angle α3 par rapport L3 et selon un angle α4 par rapport L4, R34 et L3 et L4 définissant un plan E34 qui est parallèle au plan E12,
le première enregistrement d'image montrant un point déformé P3'(t1) et un point déformé P4'(t1) et le segment de référence déformé R34(t1) à un instant t1,
le deuxième enregistrement d'image montrant un point déformé P3'(t2) et un point déformé P4'(t2) et le segment de référence déformé R34'(t2) à un instant t2,
les points P3'(t1) et P4'(t1) et P3'(t2) et P4'(t2) pouvant être extraits des enregistrements d'images au moyen de procédés connus de traitement d'image, de sorte qu'un troisième vecteur de déplacement L3', qui décrit le déplacement du troisième point déformé P3' de la position P3'(t1) vers la position P3'(t2) des enregistrements d'images, et
un quatrième vecteur de déplacement L4', qui décrit le déplacement du quatrième point déformé P4' de la position P4'(t1) vers la position P4'(t2), sont mesurés à partir des images enregistrées de sorte que
la modélisation mathématique sur la base
- d'une compensation projective en supposant que L3 et L4 et/ou R34(t1) et R34(t2) soient parallèles,
- d'une rectification affine en produisant l'angle non déformé α3 et/ou l'angle non déformé a4,
- d'une rectification isométrique en déterminant le paramètre d'échelle à partir du rapport s=R34'/R34
est faisable.

7. Procédé selon la revendication 6, dans lequel à partir du troisième vecteur de déplacement L3' et du quatrième vecteur de déplacement L4' un vecteur de déplacement L34' est formé comme moyenne entre L3' et L4', de sorte que
- la compensation projective en supposant que L34, L3 et L4 et R34(t1) et R34(t2) soient parallèles,
- la rectification affine en produisant l'angle non déformé α34 comme angle entre L34 et R34 en supposant que α34=α3=α4
sont faisables.

8. Procédé selon l'une des revendications 6 à 7, dans lequel l'angle α34 et/ou l'angle α4 correspondent à 90 degrés.
